# NEW EUROPEAN PATENT SPECIFICATION

(11) **EP 0 495 099 B2**
(45) Date of publication and mention of the opposition decision: **10.06.2009**
(45) Mention of the grant of the patent: 03.06.1998
(21) Application number: 90900353.5
(22) Date of filing: 21.12.1989
(51) Int. Cl.: C08F 10/00, C08F 4/64, C08F 210/00

(54) **OLEFIN COPOLYMER AND PRODUCTION THEREOF**
OLEFIN-KOPOLYMER UND VERFAHREN ZUR HERSTELLUNG
COPOLYMERES OLEFINES ET LEUR PRODUCTION

(30) Priority: 26.12.1988 JP 32873188; 26.12.1988 JP 32873288; 26.12.1988 JP 32873488; 24.01.1989 JP 11459689; 21.07.1989 JP 18904489
(43) Date of publication of application: 22.07.1992
(60) Divisional application: 95202089.9
(73) Proprietor: Mitsui Chemicals, Inc., Tokyo (JP)
(72) Inventor: TSUTSUI, Toshiyuki Mitsui Petrochemical Ind., Ltd, Yamaguchi 740 (JP); YOSHITSUGU, Ken Mitsui Petrochemical Ind., Yamaguchi740 i (JP); TOYOTA, Akinori Mitsui Petrochemical Ind., Ltd., Yamaguchi 740 (JP)
(74) Representative: Cresswell, Thomas Anthony
(86) International application number: PCT/JP1989/001281
(87) International publication number: WO 1990/007526

(56) References cited:
- EP-A- 0 057 891
- EP-A- 0 164 215
- EP-A- 0 284 707
- EP-A1- 0 109 779
- EP-A1- 0 123 510
- EP-A1- 0 141 597
- EP-A1- 0 232 595
- EP-A1- 0 260 999
- EP-A1- 0 284 707
- EP-A1- 0 324 856
- EP-A2- 0 341 091
- EP-B1- 0 263 718
- EP-B1- 0 283 164
- WO-A1-88/03932
- WO-A1-88/08432
- CA-A- 2 008 315
- DE-A1- 2 637 990
- DE-A1- 2 637 991
- FR-A1- 2 346 372
- GB-A- 2 052 532
- JP-A- 59 051 905
- JP-A- 63 152 608
- JP-A- 63 235 309
- JP-A- 63 248 803
- JP-A- 63 251 405
- JP-A- 63 295 607
- US-A- 3 645 992
- US-A- 4 761 462
- PATENT ABSTRACTS OF JAPAN, vol. 11, no. 251 (C-440)[2698], 14th August 1987; & JP-A-62 057 406 (MITSUI) 13-03-1987
- PATENT ABSTRACTS OF JAPAN, vol. 11, no. 394 (C-465)[2841], 23rd December 1987; & JP-A-62 153 307 (SUMITOMO) 08-07-1987
- PATENT ABSTRACTS OF JAPAN vol. 11, no. 349 (C-456)(2796) 14 November 1987 & JP-A-62 121 707 ( MITSUI PETROCHEMICAL INDUSTRIES LTD. ) 3 June 1987
- PATENT ABSTRACTS OF JAPAN vol. 11, no. 349 (C-456)(2796) 14 November 1987 & JP-A-62 119 212 ( MITSUI PETROCHEMICAL INDUSTRIES LTD. ) 30 May 1987
- PATENT ABSTRACTS OF JAPAN vol. 12, no. 450 (C-547)(3297) 25 November 1988 & JP-A-63 175 004 ( MITSUI PETROCHEMICAL INDUSTRIES LTD. ) 19 July 1988
- PATENT ABSTRACTS OF JAPAN vol. 12, no. 444 (C-545)(3291) 22 November 1988 & JP-A-63 168 407 ( SHOWA DENKO K.K. ) 7 December 1988
- Encyclopedia of Polymer Science and Engineering, vol. 4, John Wiley & Sons, 1986, pp. 192, 193
- ASTM D 3593-8 1985 / ASTM D 5296-97 / ASTM D 3536-91.
- K. Heiland et al., Makromol. Chem., 193, 1992, pp. 601-610
- A. Toyota et al., J. Mol. Cat., 56, 1989, pp. 237-247
- W. Kaminsky et al., Transition Metals and Organomettalics as Catalysts for Olefin polymerization, Springer Verlag, 1988, pp. 291-301

## Description

### FIELD OF THE INVENTION

This invention relates to novel ethylene copolymers and process for preparing the same and more particularly to novel ethylene copolymers excellent in flowability in spite of the fact that they are narrow in molecular weight distribution (M̅w/M̅m) in comparison with conventionally known ethylene copolymers, and to process for preparing the same.

When molded into articles such as film, copolymers of ethylene and α-olefins of 3 to 20 carbon atoms are found to have excellent mechanical strength such as tensile strength, tear strength or impact strength and also excellent heat resistance, stress crack resistance, optical characteristics and heat-sealing properties in comparison with conventional high-pressure low density polyethylenes, and are known as materials particularly useful for the preparation of inflation film or the like.

Generally speaking, the ethylene copolymers mentioned above have such excellent characteristics that when said copolymers come to be narrower in molecular weight distribution represented by the ratio (M̅w/M̅n) of weight average molecular weight (M̅w) to number average molecular weight (M̅n), the molded articles obtained therefrom, such as film, are found to be less tacky. However, when these ethylene copolymers having a narrow molecular weight distribution are melted, there was such drawbacks that their flowability represented by the ratio (MFR₁₀/MFR₂) of MFR₁₀ under a load of 10 kg to MFR₂ under a load of 2.16 kg as measured at 190°C is small, with the result that they become poor in moldability.

Therefore, if ethylene copolymers which are small in value of M̅w/M̅n and narrow in molecular weight distribution and, moreover, large in value of MFR₁₀/MFR₂ and excellent in flowability come to be obtained, such ethylene copolymers are certainly of great commercial value.

On the other hand, polypropylene has wide applications in the field of plastics because of its excellent physical properties. For example, polypropylene is widely used as packaging film material. In the applications of the type, however, because of its relatively high melting point, polypropylene is generally copolymerized with ethylene or α-olefins of 4 to 20 carbon atoms in order to improve heat-sealing properties at low temperature, and is used in the form of propylene/α-olefin copolymer.

Packaging films formed from these known propylene/α-olefin copolymers are still not sufficient in heat-sealing properties, though they are excellent in transparency and scratch resistance in comparison with those formed from low density polyethylene, and accordingly it is hoped that propylene/α-olefin copolymers excellent in heat-sealing properties even at lower temperatures will come to be obtained.

It is well known that the above-mentioned propylene/α-olefin random copolymers may be improved in heat-sealing properties by increasing the proportion of ethylene or α-olefin of 4 to 20 carbon atoms to propylene in the copolymer. However, if the proportion of ethylene or α-olefin of 4 to 20 carbon atoms is increased in the copolymerization, the resulting propylene/α-olefin copolymer increases in amount of the solvent-soluble component, whereby the resultant copolymer come to be poor in anti-blocking properties and also in stiffness.

Such propylene/α-olefin random copolymers excellent in heat-sealing properties, anti-block properties and stiffness as mentioned above are available only when they have a low melting point in spite of the fact that the proportion of α-olefin in the copolymer is small.

Incidentally, olefin polymerization catalysts composed generally of titanium compounds or vanadium compounds and organoaluminum compounds have heretofore been used for preparing ethylene copolymers. In recent years, however, catalysts composed of zirconium compounds and aluminoxane have been proposed of late as new Ziegler polymerization catalysts. Japanese Patent L-O-P Publn. No. 19309/1983 discloses a process for polymerizing ethylene and one or two or more C₃-C₁₂ α-olefins at a temperature of from -50°C to 200°C in the presence of a catalyst composed of a transition metal containing compound represented by the following formula

(Cyclopentadienyl)₂MeRHal

wherein R is cyclopentadienyl, C₁-C₆ alkyl or halogen, Me is a transition metal, and Hal is halogen, and a linear aluminoxane represented by the following formula

Al₂OR₄(Al (R) - O)ₙ

wherein R is methyl or ethyl, and n is a number of 4-20, or a cyclic aluminoxane represented by the following formula 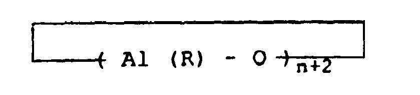 wherein R and n are as defined above. The publication cited above describes that ethylene should be polymerized in the presence of small amounts, up to 10% by weight, of somewhat long chain α-olefins or mixtures thereof in order to control a density of the resulting polyethylene.

Japanese Patent L-O-P Publn. No. 95292/1984 discloses an invention relating to a process for preparing a linear aluminoxane represented by the following formula 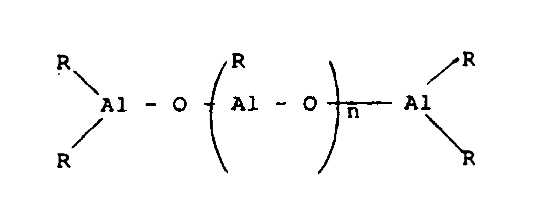 wherein n is 2-40, and R is C₁-C₆ alkyl, and cyclic aluminoxane represented by the following formula, 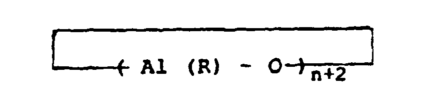 wherein n and R are as defined above. The publication cited above describes that olefins are polymerized in the presence of the aluminoxane prepared by the process of said publication, for example, methyl aluminoxane in admixture with a bis(cyclopentadienyl) compound of titanium or zirconium, whereupon at least twenty-five million g of polyethylene per 1 g of the transition metal per hour is obtained.

Japanese Patent L-O-P Publn. No. 35005/1985 discloses a process for preparing olefin polymerization catalysts, wherein an aluminoxane compound represented by the following formula 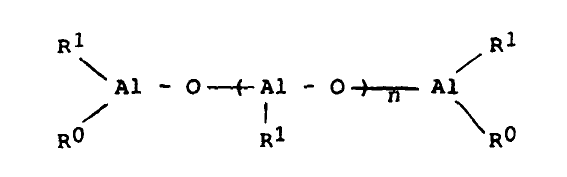 wherein R¹ is C₁-C₁₀ alkyl, and R⁰ is R¹ or represents -O- by linkage therewith, is first allowed to react with a magnesium compound, the resulting reaction product is then chlorinated, followed by treating with a Ti, V, Zr or Cr compound. This publication cited above describes that the catalysts prepared by the process of said publication are particularly useful for the copolymerization of mixtures of ethylene and C₃-C₁₂ α-olefins.

Japanese Patent L-O-P Publn. No. 35006/1985 discloses a combination of (a) mono-, di- or tri-cyclopentadienyl of two or more different transition metals or derivatives thereof and (b) aluminoxane as a catalyst system for preparing reactor blend polymers. Example 1 of the above-cited publication discloses that polyethylene having a number average molecular weight of 15,300, a weight average molecular weight of 36,400 and containing 3.4% of the propylene component has been obtained by polymerization of ethylene with propylene in the presence of a combination of bis(pentamethylcyclopentadienyl)zirconium dimethyl and aluminoxane as the catalyst. Example 2 of the said publication discloses polymerization of ethylene with propylene in the presence of a combination of bis(pentamethylcyclopentadienyl)zirconium dichloride, bis(methylcyclopentadienyl)zirconium dichloride and aluminoxane as the catalyst, whereby a blend of polyethylene and ethylene/propylene copolymer is obtained, said polyethylene having a number average molecular weight of 2,000, a weight average molecular weight of 8,300 and the propylene content of 7.1 mol%, and comprising a toluene-soluble portion having a number average molecular weight of 2,200, a weight average molecular weight of 11,900 and the propylene content of 30 mol% and a toluene-insoluble portion having a number average molecular weight of 3,000, a weight average molecular weight of 7,400 and the propylene content of 4.8 mol%. Similarly, Example 3 of the said publication discloses a blend of LLDP and an ethylene/propylene copolymer, said LLDPE comprising a soluble portion having a molecular weight distribution (M̅w/M̅n) of 4.57 and the propylene content of 20.6% and an insoluble portion having the molecular weight distribution of 3.04 and the propylene content of 2.9 mol%.

Japanese Patent L-O-P Publn. No. 35007/1985 discloses a process for polymerizing ethylene alone or together with α-olefins of at least 3 carbon atoms in the presence of a catalyst system containing metallocene and a cyclic aluminoxane represented by the following formula 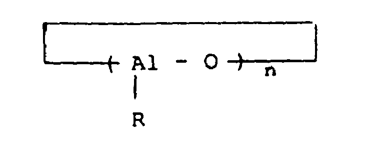 wherein R is alkyl of 1-5 carbon atoms, and n is an integer of 1 to about 20, or a linear aluminoxane represented by the following formula 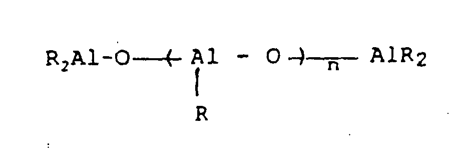 wherein R and n are as defined above. According to the said publication, the polymers obtained by the above-mentioned process are alleged to have a weight average molecular weight of from about 500 to about 1,400,000 and a molecular weight distribution of 1.5-4.0.

Japanese Patent L-O-P Publn. No. 35008/1985 discloses polyethylene or copolymers of ethylene and C₃-C₁₀ α-olefins, both having a broad molecular weight distribution, obtained by using a catalyst system containing at least two kinds of metallocenes and aluminoxane. The said copolymers disclosed in the above-mentioned publication are alleged to have a molecular weight distribution (M̅w/M̅n) of 2-50.

Japanese Patent L-O-P Publn. No. 130314/1986 discloses polypropylene high in isotacticity obtained by polymerization of propylene in the presence of a catalyst system comprising a sterically fixed zirconium-chelate compound and aluminoxane.

J. Am. Chem. Soc., 109, 6544 (1987) discloses formation of a high molecular weight isotactic polypropylene obtained by polymerization of propylene in the presence of a catalyst system comprising ethylenebis(indenyl)hafnium dichloride or its hydride and aluminoxane, said isotactic polypropylene having a narrow molecular weight distribution (M̅w/M̅n) of 2.1-2.4.

Japanese Patent L-O-P Publn. No. 142005/1987 discloses a stereoblock polypropylene having M̅w/M̅n of 5.0-14.9 obtained by polymerization of propylene in the presence of a catalyst system comprising tetramethylethylenebis(cyclopentadienyl) titanium chloride and aluminoxane. The polypropylene thus obtained is short in isotactic chain length and is a rubbery polymer.

The present inventors have come to accomplish the present invention on the basis of their finding that ethylene copolymers which are small in M̅w/M̅n and narrow in molecular weight distribution and, moreover, large in MFR₁₀/MFR₂ and excellent in flowability are obtained by copolymerization of ethylene with α-olefins of 3-20 carbon atoms in the presence of olefin polymerization catalysts composed of specific hafnium compounds and organoaluminum oxy-compounds.

Accordingly, the present invention is to solve such problems associated with the prior art as mentioned above, and an object of the invention is to provide ethylene copolymers which are small in M̅w/M̅n and narrow in molecular weight distribution and, moreover, which are large in MFR₁₀/MFR₂ and excellent in flowability, and processes for preparing the same.

### DISCLOSURE OF THE INVENTION

The present invention provides an ethylene copolymer comprising 60 to 96% by mol of structural units (a) derived from ethylene and 4 to 40% by mol of structural units (b) derived from an α-olefin of 3 to 20 carbon atoms, and having
(A) a density of 0.85 to 0.92 g/cm³,
(B) an intrinsic viscosity [η] as measured in decalin at 135°C of 0.1 to 10 dl/g,
(C) a ratio (Mw/Mn) of a weight average molecular weight (Mw) to a number average molecular weight (Mn) as measured by GPC of 1.2 to 3.0, and
(D) a ratio (MFR₁₀/MFR₂) of MFR₁₀ under a load of 10 kg to MFR₂ under a load of 2.16 kg at 190°C of 8 to 50. The present invention further provides a process for
   preparing an ethylene copolymer which process comprises copolymerizing ethylene and an α-olefin of 3 to 20 carbon atoms in the presence of a catalyst comprising
   [A] a hafnium compound having as a ligand a multidentate compound in which at least two groups selected from indenyl groups or substituted groups thereof are linked together via ethylene groups of hafnium compounds obtained by treating the above-mentioned hafnium compounds with alkysilylated silica gel, and
   [B] an organoaluminium oxy-compound.

### BRIEF DESCRIPTION OF THE DRAWINGS

Fig. 1 is an illustration of process for the preparation of the olefin copolymers of the present invention.

Figs. 3-5 are stepwise illustrative of the method of evaluation of heat-sealing properties of the propylene random copolymer of the present invention.

### BEST MODE OF PRACTICING THE INVENTION

The ethylene copolymers of the present invention and processes for preparing the same are illustrated below in detail.

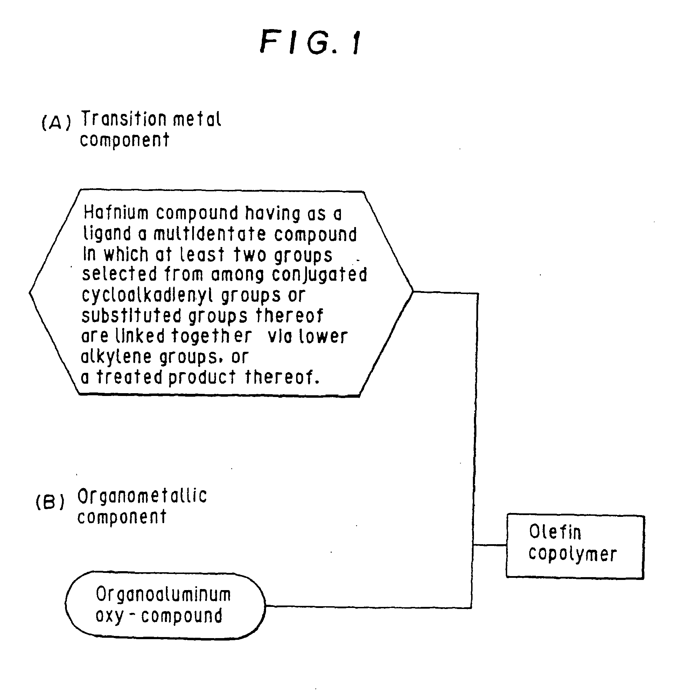

The process for the preparation of the ethylene copolymers of the present invention is illustratively shown in Fig. 1

The ethylene copolymers of the invention are random copolymers of ethylene and α-olefins of 3-20 carbon atoms. The ethylene copolymers have a density of 0.85-0.92 g/cm³, preferably 0.85-0.91 g/cm³ and especially 0.85-0.90 g/cm³.

In this connection, the density of these ethylene copolymers was measured by gradient tube density determination using the strand of ethylene copolymer used at the time of determining MFR₂ under a load of 2.16 kg at 190°C.

In these ethylene copolymers, are present structural units (a) derived from ethylene in an amount of 60-96 mol%, preferably 65-95 mol% and especially 70-94 mol%, and structural units (b) derived from α-olefin of 3-20 carbon atoms in an amount of 4-40 mol%, preferably 5-35 mol% and especially 6-30 mol%.

The composition of the copolymer is determined by measuring a spectrum of ¹³C-NMR of a specimen obtained by dissolving about 200 mg of the copolymer in 1 ml of hexachlorobutadiene in a test tube of 10 mmφ under the conditions of a measurement temperature of 120°C, measurement frequency of 25.05 MHz, spectrum width of 1500 Hz, pulse repetition time of 4.2 sec. and pulse width of 6 sec.

Alpha olefins of 3-20 carbon atoms used in the present invention include propylene, 1-butene, 1-pentene, 1-hexene, 4-methyl-1-pentene, 1-octene, 1-decene, 1-dodecene, 1-tetradecene, 1-hexadecene, 1-octadecene, 1-eicosene, etc.

The ethylene copolymers of the present invention desirably have an intrinsic viscosity [η] of 0.1-10 dl/g, preferably 0.5-6 dl/g as measured in decalin at 135°C.

The molecular weight distribution (M̅w/M̅n) as obtained by gel permeation chromatography (GPC) of the ethylene copolymers of the invention is 1.2-3.0, preferably 1.4-3.0 and especially 1.5-3.0. As is evidenced by the foregoing, the ethylene copolymers of the invention are narrow in molecular weight distribution and excellent in anti-block properties.

In this connection, a value of (M̅w/M̅n) obtained in the invention was determined by the following procedure in accordance with Takeuchi, "Gel Permeation Chromatography," Maruzen, Tokyo.
(1) Using a standard polystyrene having the known molecular weight (a monodispersed polystyrene produced and sold by Toyo Soda K.K.), molecular weight M and GPC (Gel Permeation Chromatography) count of the sample are measured to prepare a correlation diagram calibration curve of the molecular weight M and EV (Elution Volume). The concentration of the sample used is maintained at 0.02% by weight.
(2) GPC chromatograph of the sample is taken by GPC measurement, and a number average molecular weight M̅n and a weight average molecular weight M̅w, in terms of polystyrene, are calculated from the calibration curve mentioned in the above procedure (1) to obtain a value of M̅w/M̅n. In that case, the conditions under which the sample is prepared, and the conditions under which GPC measurement is conducted are as follows:

### [Preparation of sample]

(a) The sample is put in an Erlenmeyer flask together with o-dichlorobenzene so that the same amounts to 0.1% by weight.
(b) The Erlenmeyer flask is heated at 140°C and stirred for about 30 minutes to dissolve the sample in o-dichlorobenzene.
(c) The solution is subjected to GPC.

### [GPC measurement conditions]

The measurement was conducted under the following conditions.

| | | |
|---|---|---|
| (a) | Apparatus | 150C-ALC/GPC manufactured by Waters Co. |
| (b) | Column | GMH Type manufactured by Toyo Soda K.K. |
| (c) | Amount of sample | 400 µl |
| (d) | Temperature | 140°C |
| (e) | Flow rate | 1 ml/min |

In the ethylene copolymers of the invention, a (MFR₁₀/MFR₂) ratio of MFR₁₀ at 190°C under a load of 10 kg to MFR₂ at 190°C under a load of 2.16 kg is 8-50, preferably 8.5-45 and especially 9-40.

Such ethylene copolymers having the MFR₁₀/MFR₂ ratio falling within the range of 8-50 as mentioned above are quite favorable in flowability at the time when they are melted.

In contrast thereto, the aforementioned known ethylene copolymers having the M̅w/M̅n ratio of 1.2-4 will come to have the MFR₁₀/MFR₂ ratio in the range of 4-7, and hence they are poor in flowability at the time when they are melted.

As mentioned above, the ethylene copolymers of the present invention have such excellent characteristics that they have a small molecular weight distribution (M̅w/M̅n), and molded articles resulting therefrom are less sticky and, at the same time, they are large in MFR₁₀/MFR₂ and excellent in flowability at the time when they are melted.

The ethylene copolymers of the invention as illustrated above may be prepared by copolymerization of ethylene with α-olefins of 3-20 carbon atoms so that the resulting copolymers have a density of 0.85-0.92 g/cm³ in the presence of catalysts formed from
[A] hafnium compounds having multidentate coordination compounds as ligands in which at least two groups selected from among conjugated cycloalkadienyl groups or substituted groups thereof are linked together via ethylene, or hafnium catalyst components obtained by treating the above-mentioned hafnium compounds with alkylsilylated silica gel, and
[B] organoaluminum oxy-compounds.

The catalyst components [A] used in the invention are hafnium compounds having multidentate coordination compounds as ligands in which at least two groups selected from among conjugated cycloalkadienyl groups or substituted groups thereof, e.g. indenyl group, substituted indenyl group and partially hydrated compounds thereof, are linked together via ethylene groups, or compounds obtained by treating the above-mentioned hafnium compounds with alkylsilylated silica gel.

The above-mentioned hafnium compounds include, for example, the following compounds.
Ethylenebis (indenyl)dimethyl hafnium,
Ethylenebis (indenyl)diethyl hafnium,
Ethylenebis(indenyl)diphenyl hafnium,
Ethylenebis(indenyl)methyl hafnium monochloride,
Ethylenebis (indenyl)ethyl hafnium monochloride,
Ethylenebis (indenyl)methyl hafnium monobromide,
Ethylenebis(indenyl)hafnium dichloride,
Ethylenebis(indenyl)hafnium dibromide,
Ethylenebis (4,5,6,7-tetrahydro-1-indenyl)dimethyl hafnium,
Ethylenebis(4,5,6,7-tetrahydro-1-indenyl)methyl hafnium monochloride,
Ethylenebis(4,5,6,7-tetrahydro-1-indenyl)hafnium dichloride,
Ethylenebis(4,5,6,7-tetrahydro-1-indenyl)hafnium dibromide,
Ethylenebis(4-methyl-1-indenyl)hafnium dichloride,
Ethylenebis(5-methyl-1-indenyl)hafnium dichloride,
Ethylenebis(6-methyl-1-indenyl)hafnium dichloride,
Ethylenebis(7-methyl-1-indenyl)hafnium dichloride,
Ethylenebis(5-methoxy-1-indenyl)hafnium dichloride,
Ethylenebis(2,3-dimethyl-1-indenyl)hafnium dichloride,
Ethylenebis(4,7-dimethyl-1-indenyl)hafnium dichloride,
Ethylenebis(4,7-dimethoxy-1-indenyl)hafnium dichloride.

The above-mentioned hafnium compounds may contain small amounts of zirconium or titanium. In such a case, the content of zirconium or titanium is less than 1% by weight, preferably less than 0.7% by weight and especially less than 0.5% by weight.

The hafnium catalyst components used in the present invention may include compounds obtained by treating the above-mentioned hafnium compounds with alkylsilylated silica gel. More particularly, the said hafnium catalyst components may be hafnium compound solutions which are obtained, for example, by passing a solution of the above-mentioned hafnium compound in an organic solvent such as toluene through a column packed with alkylsilylated silica gel, wherein said hafnium compound is brought into contact with the alkylsilylated silica gel.

The organic solvents used in that case are preferably aromatic hydrocarbons such as toluene, benzene and xylene. The alkylsilylated silica gel used may includes those obtained by treating silica gel with dimethyl dichlorosilane, ethylmethyl dichlorosilane, trimethyl chlorosilane, trimethyl bromosilane, divinyl dichlorosilane, diethyl dichlorosilane or methylpropyl dichlorosilane. The hafnium concentration in the hafnium compound solution is usually from 1 x 10⁻⁵ to 5 x 10⁻³ mol/l, and the amount of the alkylsilylated silica gel used is usually 20-500 g per 1 mmol of the hafnium compound. A temperature at which the hafnium compound solution is brought into contact with the alkylsilylated silica gel is usually 0-50°C.

When the hafnium catalyst components obtained by treating the above-mentioned hafnium compounds with the alkylsilylated silica gel are used as the catalyst components [A], ethylene copolymers excellent in transparency are obtained.

The catalyst components [B] used in the process of the present invention are organoaluminum oxy-compounds. The organoaluminum oxy-compounds used as the catalyst components may be shown as benzene-soluble aluminoxanes represented by the following general formulas (1) and (II). 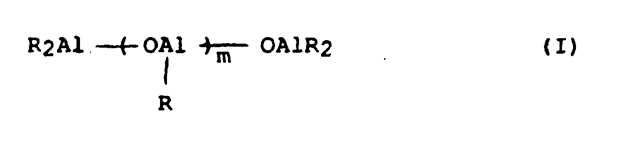 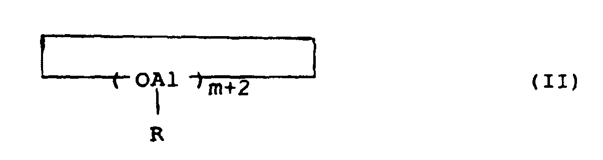 wherein R may be the same or different and is a hydrocarbon group such as methyl, ethyl, propyl or butyl, preferably methyl or ethyl and especially methyl, and m is an integer of at least 2, preferably at least 5. The above-mentioned aluminoxanes may be prepared, for example, by the procedures as exemplified below.
(1) A procedure which comprises reacting a suspension in a hydrocarbon medium of a compound containing water of absorption or a salt containing water of crystallization, for example, magnesium chloride hydrate, copper sulfate hydrate, aluminumsulfate hydrate, nickel sulfate hydrate or serous chloride hydrate, with trialkylaluminum.
(2) A procedure which comprises reacting trialkylaluminum directly with water, water vapor or ice in a medium such as benzene, toluene, ethyl ether and tetrahydrofuran.

The aluminoxanes as illustrated above may contain small amounts of organometallic components.

Further, the organoaluminum oxy-compounds used in the present invention may be those which are insoluble in benzene. The benzene-insoluble organoaluminum oxy-compounds are illustrated hereinafter.

The benzene-insoluble organoaluminum oxy-compounds used in the invention may be prepared by (i) reaction of organoaluminum compounds with water or (ii) reaction of solutions of aluminoxane, for example, hydrocarbon solutions thereof, with water or active hydrogen-containing compounds.

The benzene-insoluble organoaluminum oxy-compounds are considered to have alkyloxyaluminum units represented by the formula 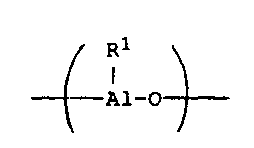 wherein R¹ is hydrocarbon of 1 ∼ 12 carbon atoms and Al component soluble in benzene at 60°C is in an amount, in terms of Al atom, of less than 10%, preferably less than 5% and especially less than 2%, thus they are insoluble or sparingly soluble in benzene.

Solubility in benzene of the organoaluminum oxy-compounds of the present invention is determined by suspending the organoaluminum oxy-compound equivalent to Al of 100 mg atom in 100 ml of benzene, stirring the suspension at 60°C for 6 hours, filtering the thus treated suspension at a temperature elevated to 60°C using G-5 glass filter equipped with a jacket, washing 4 times the solids portion separated on the filter with 50 ml of benzene kept at 60°C and then measuring the amount of Al atoms (× mmol) present in the total filtrate.

In the alkyloxyaluminum units mentioned above, R¹ is methyl, ethyl, n-propyl, isopropyl, n-butyl, isobutyl, pentyl, hexyl, octyl, decyl, cyclohexyl, cyclooctyl, etc. Among these, preferred are methyl and ethyl, particularly methyl.

In addition to the alkyloxyaluminum units of the formula 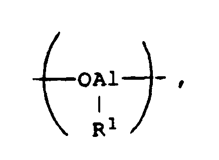 the benzene-insoluble organoaluminum oxy-compounds of the invention may contain oxyaluminum units represented by the formula 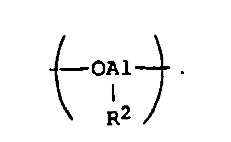 In the above-mentioned formulas, R¹ is as defined previously, R² is hydrocarbon of 1 ∼ 12 carbon atoms, alkoxyl of 1 ∼ 12 carbon atoms aryloxy of 6 ∼ 20 carbon atoms, hydroxyl, halogen or hydrogen, and R¹ and R² represent the groups different from each other. In that case, the benzene-insoluble organoaluminum oxy-compounds are preferably those containing the alkyloxyaluminum units 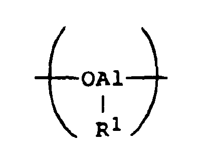 in the proportion of at least 30 mol%, preferably at least 50 mol% and especially at least 70 mol%.

The organoaluminum compounds (i) used for preparing such benzene-insoluble organoaluminum oxy-compounds as mentioned above are those represented by the formula R¹ₙAlX₃₋ₙ wherein R¹ is hydrocarbon of 1 ∼ 12 carbon atoms, X is halogen, alkoxyl of 1 ∼ 12 carbon atoms, aryloxy of 6 ∼ 20 carbon atoms or hydrogen, and n is 2 ∼ 3.

Such organoaluminum compounds (i) as mentioned above include trialkylaluminum such as trimethylaluminum, triethylaluminum, tripropylaluminum, triisopropylaluminum, tri-n-butylaluminum, tri-sec-butylaluminum, tri-tert-butylaluminum, tripentylaluminum, trihexylaluminum, trioctylaluminum, tridecylaluminum, tricyclohexylaluminum and tricyclooctylaluminum; dialkylaluminum halides such as dimethylaluminum chloride, dimethylaluminum bromide, diethylaluminum chloride, diethylaluminum bromide, and diisobutylaluminum chloride; dialkylaluminum hydrides such as diethylaluminum hydride and diisobutylaluminum hydride; dialkylaluminum alkoxides such as dimethylaluminum methoxide and diethylaluminum ethoxide; and dialkylaluminum aryloxides such as diethylaluminum phenoxide. Of these organoaluminum compounds, preferred are those of the above-mentioned general formula in which R¹ is alkyl and X is chlorine, and particularly preferred is trialkylaluminum.

In this connection, isoprenylaluminum of the general formula (i-C₄H₉)ₓAl_{y}(C₅H₁₀)_{z} wherein x, y and z are each positive integer, and z ≥ 2x may also used as the organoaluminum compound (i).

The organoaluminum compounds (i) as illustrated above may be used either singly or in combination.

The active hydrogen-containing compounds (ii) used in preparing the benzene-insoluble organoaluminum oxy-compounds of the present invention include alcohols such as methyl alcohol and ethyl alcohol, and diols such as ethylene glycol and hydroquinone.

When water is used in preparing the benzene-insoluble organoaluminum oxy-compounds of the present invention, the water may be used after dissolving or suspending in hydrocarbon solvents such as benzene, toluene and hexane, ether solvents such as tetrahydrofuran, and amine solvents such as triethylamine, or may be used in the form of water vapor or ice. As the water, moreover, there may also be used water of crystallization of salt such as magnesium chloride, magnesium sulfate, aluminum sulfate, copper sulfate, nickel sulfate, iron sulfate and cerrous chloride, or water of adsorption adsorbed to inorganic compounds such as silica, alumina and aluminum hydroxide or polymers.

As mentioned above, the benzene-insoluble organoaluminum oxy-compounds of the present invention may be prepared by reaction of the organoaluminum compound (i) with water, or by reaction of a solution of aluminoxane, for example, a hydrocarbon solution thereof, with water or the active hydrogen containing compound. In preparing the benzene-insoluble organoaluminum oxy-compound from the organoaluminum compound and water, the organoaluminum compound is brought into contact with water in a solvent, for example, a hydrocarbon solvent, and in that case, the water is added to the reaction system so that the organoaluminum atoms dissolved in the reaction system become less than 20% based on the total organoaluminum atom. In obtaining the benzene-insoluble organoaluminum oxy-compounds according to the procedure as mentioned above, it is desirable that the water is brought into contact with the organoaluminum compound in the proportion of 1 ∼ 5 moles, preferably 1.5 ∼ 3 moles of the water to 1 mole of the organoaluminum compound.

The above-mentioned reaction for forming the benzene-insoluble organoaluminum oxy-compounds is carried out in solvents, for example, hydrocarbon solvents. The solvents used include aromatic hydrocarbons such as benzene, toluene, xylene, cumene and cymene, aliphatic hydrocarbons such as butane, isobutane, pentane, hexane, octane, decane, dodecane, hexadecane and octadecane, alicyclic hydrocarbons such as cyclopentane, cyclooctane, cyclodecane and cyclododecane, such hydrocarbon solvents, for example, petroleum fractions, as gasoline, kerosine and gas oil, halides of the above-mentioned aromatic hydrocarbons, aliphatic hydrocarbons and alicyclic hydrocarbons, especially chlorides and bromides thereof, and ethers such as ethyl ether and tetrahydrofuran. Among these hydrocarbon media as exemplified above, particularly preferred are aromatic hydrocarbons.

A concentration in terms of Al atom of the organoaluminum compound in the reaction system is desirably 1 × 10⁻³ to 5 gram atom/l preferably 1 × 10⁻² to 3 gram atom/l, and a concentration in the reaction system of water such as water of crystallization is usually 1 × 10⁻³ to 20 mol/l, preferably 1 × 10⁻² to 10 mol/l. In that case, it is desirable that the organoaluminum atoms dissolved in the reaction system are less than 20%, preferably less than 10% and especially in the range of from 0 to 5% based on the total organoaluminum atom.

Contact of the organoaluminum compound with water may be carried out, for example, by the following procedures.
(1) A procedure wherein a hydrocarbon solution of organoaluminum is brought into contact with a hydrocarbon solvent containing water.
(2) A procedure wherein water vapor is blown into a hydrocarbon solution of organoaluminum, thereby bringing the organoaluminum into contact with the water vapor.
(3) A procedure wherein a hydrocarbon solution of organoaluminum is mixed with a hydrocarbon suspension of a compound containing water of adsorption or a compound containing water of crystallization, thereby bringing the organoaluminum into contact with the water of adsorption or water of crystallization.
(4) A procedure wherein a hydrocarbon solution of organoaluminum is brought into contact with ice.

The above-mentioned reaction of the organoaluminum with water is carried out usually at a temperature of from -100 to 150°C, preferably -50 to 100°C and especially -30 to 80°C. The reaction time, though it may largely vary depending upon the reaction temperature, is usually from 1 to 200 hours, preferably 2 to 100 hours.

In preparing the benzene-insoluble organoaluminum oxy-compounds from a solution of aluminoxane and water or a active hydrogen-containing compound, the aluminoxane present in the solution of aluminoxane is brought into contact with water or the active hydrogen-containing compound.

The solution of aluminoxane is a solution of aluminoxane in such a solvent as used in forming the above-mentioned benzene-insoluble organoaluminum oxy-compounds, preferably aromatic hydrocarbons such as benzene and toluene, and this solution may contain other components so long as they do not affect adversely the reaction between the aluminoxane and water or the active hydrogen-containing compound.

The amount of water or the active hydrogen-containing compound used in the above-mentioned reaction is 0.1 to 5 moles, preferably 0.2 to 3 moles based on 1 gram atom of aluminum present in the solution of aluminoxane. A concentration in the reaction system of aluminoxane in terms of aluminum atom is usually 1 × 10⁻³ to 5 gram atom/l, preferably 1 × 10⁻² to 3 gram atom/l, and a concentration in the reaction system of water is usually 2 × 10⁻⁴ to 5 mole/l, preferably 2 × 10⁻³ to 3 mole/l.

Taking, as an example, the reaction of the solution of aluminoxane with water, said solution of aluminoxane is brought into contact with water or the active hydrogen-containing compound, for example, by the following methods.
(1) A method which comprises bringing the solution of aluminoxane into contact with a hydrocarbon solvent containing water.
(2) A method which comprises blowing water vapor into the solution of aluminoxane, thereby bringing the aluminoxane present in the solution of aluminoxane into contact with the water vapor.
(3) A method which comprises mixing the solution of aluminoxane with a hydrocarbon solution of a compound containing water of adsorption or a compound containing water of crystallization, thereby bringing the aluminoxane present in the solution of aluminoxane into contact with the water of adsorption or water of crystallization.
(4) A method which comprises bringing the solution of aluminoxane into contact directly with water or ice.

The above-mentioned procedures may also be applied to the case wherein the active hydrogen-containing compound (ii) is used instead of water.

The reaction of the solution of aluminoxane with water or the active hydrogen-containing compound as illustrated above may be carried out usually at a temperature of from - 50° to 150°C, preferably 0° to 120°C and especially 20 ∼ 100°C. The reaction temperature, though it may largely vary depending upon the reaction temperature, is usually 0.5 ∼ 300 hours, preferably about 1 ∼ 150 hours.

In preparing the ethylene copolymers by using the olefin polymerization catalysts as mentioned above, a concentration in the polymerization system of the hafnium compound in terms of hafnium atom is usually 10⁻⁸ to 10⁻² gram atom/l, preferably 10⁻⁷ to 10⁻³ gram atom/l.

The above-mentioned organoaluminum oxy-compounds are desirably used in an amount in terms of aluminum atom in present in the reaction system of 10⁻⁴ to 10⁻¹ gram atom/l, preferably 5 × 10⁻⁴ to 5 × 10⁻² gram atom/l.

The polymerization temperature employed is from -50° to 150°C, preferably from 0° to 120°C.

The olefin polymerization mentioned above is carried out usually in vapor phase or liquid phase. In the liquid phase polymerization, the solvent used may be inert hydrocarbon, or the olefin itself may also be used as the solvent.

The hydrocarbon used in that case includes aliphatic hydrocarbons such as butane, isobutane, pentane, hexane, heptane, octane, decane, dodecane, hexadecane and octadecane, alicyclic hydrocarbons such as cyclopentane, methylcyclopentane, cyclohexane and cyclooctane, aromatic hydrocarbons such as benzene, toluene and xylene, and petroleum fractions such as gasoline, kerosine and gas oil.

The polymerization pressure employed is usually from ordinary pressure to 100 kg/cm², preferably from ordinary pressure to 50 kg/cm², and the polymerization may be carried out batchwise, semi-continuously or continuously. A molecular weight of the resulting polymer may be modified by the addition of hydrogen and/or by regulation of the polymerization temperature employed.

The first olefin polymerization catalysts which may be used to form the polymers of the invention are formed from
[A] hafnium compounds having as ligands multidentate compounds in which at least two groups selected from among conjugated cycloalkadienyl groups or substituted groups thereof are linked together via lower alkylene groups,
[B] organoaluminum oxy-compounds, and
[C] organoaluminum compounds.

In the olefin polymerization catalyst mentioned above, the hafnium compounds [A] and organoaluminum oxy-compounds [B] used may be the same as those mentioned previously.

The organoaluminum compounds [C] used herein may be those having in the molecule at least one Al-C bond, for example, the compounds as mentioned below.

That is, (i) organoaluminum compounds represented by the general formula (R¹)ₘAl(OR²)ₙHₚX_{q} wherein R¹ and R², which may be the same or different, are each hydrocarbon of usually 1 to 15 carbon atoms, preferably 1 to 10 carbon atoms, X is halogen, m is 1 ≦ m ≦ 3, n is 0 ≦ n ≦ 2, p is 0 ≦ p ≦ 2, and q is 0 ≦ q ≦ 2, and m + n + p + q = 3, and (ii) alkylated complex compounds of metals of Group 1 of the periodic table and aluminum represented by the general formula M¹Al(R¹)₄ wherein M¹ is Li, Na or K, and R¹ is as defined above.

Of the organoaluminum compounds mentioned above, particularly preferred are those having hydrocarbon groups other than n-alkyl group. Hydrocarbon groups other than n-alkyl group may include alkyl having a branched chain such as isoalkyl, cycloalkyl and aryl. The organoaluminum compounds as illustrated above may include, for example, trialkylaluminum such as triisopropyaluminum, triisobutylaluminum, tri-2-methylbutylaluminum, tri-3-methylbutylaluminum, tri-2-methylpentylaluminum, tri-3-methylpentylaluminum, tri-4-methylpentylaluminum, tri-2-methylhexylaluminum, tri-3-methylhexylaluminum and tri-2-ethylhexylaluminum; tricycloalkylaluminum such as tricyclohexylaluminum; triarylaluminum such as triphenylaluminum and tritolylaluminum; dialkylaluminum hydrides such as diisobutylaluminum hydride; and alkylaluminum alkoxides such as isobutylaluminum methoxide, isobutylaluminum ethoxide and isobutylaluminum isopropoxide. Of these organoaluminum compounds, preferred are those having branched alkyl groups, particularly trialkylaluminum compounds. Furthermore, isoprenylaluminum represented by the general formula (i-C₅H₉)ₓAly(C₅H₁₀)_{z} wherein x, y and z are each a positive integer, and z ≧ 2x, is also useful. Compounds capable of forming the above-mentioned organoaluminum compounds in the polymerization system, for example, halogenated aluminum and alkyl lithium, or halogenated aluminum and alkyl megnesium, may be added to the polymerization system.

In polymerizing olefin by using the first olefin polymerization catalysts, the hafnium compound [A] is desirably used in an amount, in terms of hafnium atoms present in the polymerization reaction system, of 10⁻⁸ ∼ 10⁻² gram atom/l, preferably 10⁻⁷ ∼ 10⁻³ gram atom/l, the organoaluminum oxy-compound [B] is desirably used in an amount, in terms of aluminum atoms present in the polymerization reaction system, of less than 3 mg atom/l, preferably 0.01 ∼ 2 mg atom/l and especially 0.02 ∼ 1 mg atom/l, and the organoaluminum compound [C] is desirably used in such an amount that the proportion of aluminum atoms derived from said organoaluminum compound [C] in the reaction system to the total aluminum atoms of the organoaluminum oxy-compound [B] and organoaluminum compound [C] is 20 ∼ 99%, preferably 25 ∼ 98% and especially 30 ∼ 95%.

In the reaction system, the ratio of the total aluminum atom of the organoaluminum oxy-compound [B] and organoaluminum compound [C] to halfnium atoms of the hafnium compound [A] is usually 20 ∼ 10000, preferably 50 ∼ 5000 and especially 100 ∼ 2000.

The olefin polymerization may be carried out by employing the same condition as used in the preparation of ethylene copolymers as aforesaid.

Hereinafter, the second olefin polymerization catalysts which may be used to form the polymers of the present invention are illustrated in detail.

The second olefin polymerization catalysts of the invention are formed from
[A] hafnium compounds having as ligands multidentate compounds in which at least two groups selected from among conjugated cycloalkadienyl groups or substituted groups thereof are linked together via lower alkylene groups,
   [B-1] organoaluminum oxy-compounds formed from tri-n-alkylaluminum, and
   [B-2] organoaluminum oxy-compounds in which at least one hydrocarbon group other than n-alkyl is linked to Al atom.

In the olefin polymerization catalysts mentioned above, the hafnium compounds [A] used are the same as those mentioned previously.

The catalyst components [B-1] used in the second olefin polymerization catalysts of the invention are organoaluminum oxy-compounds formed from tri-n-alkylaluminum.

n-alkyl group in the tri-n-alkylaluminum mentioned above includes methyl, ethyl, n-propyl, n-butyl, n-octyl and n-decyl. Among these, particularly preferred is methyl.

The catalyst components [B-2] used in the second olefin polymerization catalysts of the invention are organoaluminum oxy-compounds in which at least one hydrocarbon group other than n-alkyl is linked to Al atom.

The hydrocarbon group other than n-alkyl includes alkyl having branched chain such as isoalkyl, cycloalkyl and aryl.

The above-mentioned organoaluminum oxy-compounds [B-2] in which at least one hydrocarbon group other than n-alkyl is linked to Al atom may be formed from organoaluminum compounds in which at least one hydrocarbon group other than n-alkyl is linked to Al atom. Such organoaluminum compounds as used in the above case include, for example, trialkylaluminum such as triisopropylaluminum, triisobutylaluminum, tri-2-methylbutylaluminum, tri-3-methylbutylaluminum, tri-2-methylpentylaluminum, tri-3-methylpentylaluminum, tri-4-methylpentylaluminum, tri-2-methylhexylaluminum, tri-3-methylhexylaluminum and tri-2-ethylhexylaluminum; tricycloalkylaluminum such as tricyclohexylaluminum; triarylaluminum such as triphenylaluminum and tritolylaluminum; dialkylaluminum hydrides such as diisobutylaluminum hydride; and alkylaluminum alkoxides such as isobutylaluminum methoxide, isobutylaluminum ethoxide and isobutylaluminum isopropoxide. Of these organoaluminum compounds, preferred are those having branched alkyl groups, particularly trialkylaluminum compounds. Furthermore, isoprenylaluminum represented by the general formula (i-C₄H₉)ₓAl_{y}(C₅H₁₀)_{z} wherein x, y and z are each a positive integer, and z ≧ 2x, is also useful.

In polymerization olefin by using the second olefin polymerization catalysts, the hafnium compound [A] is desirably used in an amount, in terms of hafnium atoms present in the polymerization reaction system, of 10⁻⁸ ∼ 10⁻² gram atom/l, preferably 10⁻⁷ ∼ 10⁻³ gram atom/l, the organoaluminum oxy-compound [B-1] in an amount, in terms of aluminum atoms in the polymerization reaction system, of less than 3 mg atom/l, preferably 0.01 ∼ 2 mg atom/l and especially 0.02 ∼ 1 mg atom/l, and the organoaluminum oxy-compound [B-2] in such an amount that the proportion of aluminum atoms derived from the organoaluminum oxy-compound [B-2] in the reaction system to the total aluminum atom of the organoaluminum oxy-compound [B-1] and organoaluminum oxy-compound [B-2] is 20 ∼ 95%, preferably 25 ∼ 90% and especially 30 ∼ 85%.

In the reaction system, the ration of the total aluminum atom of the organoaluminum oxy-compound [B-1] and organoaluminum oxy-compound [B-2] to hafnium atoms of the hafnium compound [B] is usually 20 ∼ 10000, preferably 50 ∼ 5000 and especially 100 ∼ 2000.

In that case, the olefin polymerization may be carried out by employing the same conditions as used in the preparation of ethylene copolymers as aforesaid.

### EFFECT OF THE INVENTION

Novel ethylene copolymers of the present invention are small in M̅w/M̅n and narrow in molecular weight distribution and, moreover, large in MFR₁₀/MFR₂ and excellent in flowability. Accordingly, the ethylene copolymers of the invention have excellent processability and are excellent in anti-blocking properties and the like properties. In the present invention, there are also provided processes for preparing these novel copolymers mentioned above readily and efficiently.

The present invention is illustrated below with reference to examples, but it should be construed that the invention is in no way limited to those examples.

### Example (Preparation of ethylene copolymer) (Preparation of methylaluminoxane)

Methylaluminoxane was prepared in accordance with the procedure described in Polymer Commun., 29, 180 (1988).

### (Synthesis of ethylenebis(indenyl)hafnium dichloride)

A nitrogen-purged 200 ml glass flask was charged with 5.4 g of bis(indenyl)ethane [synthesized on the basis of Bull. Soc. Chim., 2954 (1967)] and 50 ml of THF, and the flask was cooled with stirring to -30° ∼ -40°C. To the flask was added dropwise 31.5 ml of n-Bu Li (1.6M solution), stirred successively at -30°C for 1 hours, and the temperature was elevated spontaneously to room temperature, thereby anionizing the bis(indenyl)ethane. Separately, a nitrogen-purged 200 ml glass flask was charged with 60 ml of THF, and the flask was cooled to below -60°C, followed by gradual addition of 6.7 g of HfCl₄ (contained 0.78% by weight of zirconium atoms as contaminants). Thereafter, the flask was heated-up to 60°C and stirred for 1 hour. To the flask was added dropwise the anionized ligand, and stirred at 60°C for 2 hours, followed by filtration with a glass filter. The filtrate was concentrated at room temperature to about 1/5 of the original volume. By this operation conducted, solids were separated. The separated solids were filtered with a glass filter, followed by washing with hexane/ethyl ether and vacuum drying to obtain ethylenebis(indenyl)hafnium dichloride.

The hafnium compound thus obtained contained 0.40% by weight of zirconium atoms.

### (Polymerization)

A thoroughly nitrogen-purged 2 liter glass flask was charged with 950 ml of toluene and 50 ml of 1-octene, and ethylene gas was passed therethrough at a rate of 160 l/hr. The temperature in the system was elevated to 55°C, and 1.88 mmoles in terms of aluminum atom of methylaluminoxane and 7.5 × 10⁻³ mmole of ethylenebis(indenyl)hafnium dichloride were added to the system to initiate polymerization. The polymerization was carried out at 60°C for 10 minutes under atmospheric pressure while continuously feeding ethylene gas. The polymerization was stopped by the addition of small amounts of methanol, and the polymerization solution obtained was poured in large amounts of methanol to separate polymer. The separated polymer was dried at 130°C for 12 hours under reduced pressure to obtain 23.2 g of a polymer having a density of 0.866 g/cm³, the ethylene content of 81.3 mol%, [η] of 1.71 dl/g, M̅w/M̅n of 2.59, MFR₂ of 2.12 g/10 min and MFR₁₀/MFR₂ ratio of 13.1.

### Example 2

A thoroughly nitrogen-purged 2 liter glass flask was charged with 1 liter of toluene, and a mixed gas of ethylene and propylene (140 l/hr and 40 l/hr respectively) was passed therethrough. The temperature in the system was elevated to 75°C, and 1.88 mmoles in terms of aluminum atom of methylaluminoxane and 7.5 × 10⁻³ mmol of ethylenebis(indenyl)hafnium dichloride were added to the system to initiate polymerization. The polymerization was carried out at 80°C for 10 minutes under atmospheric pressure while continuously feeding the above-mentioned mixed gas to the system. Thereafter, the operation was conducted in the same manner as in Example 1 to obtain 17.5 g of a polymer having a density of 0.887 g/cm³, the ethylene content of 84.0 mol%, [η] of 1.50 dl/g, M̅w/M̅n of 2.50, MFR₂ of 0.80 g/10 min and MFR₁₀/MFR₂ ratio of 12.7.

### Comparative Example 1

A copolymer of ethylene and propylene (prepared by using a catalyst composed of VOCl₃ and aluminum ethyl sesquichloride) having a density of 0.87 g/cm³, MFR₂ of 2.9 g/10 min and M̅w/M̅n of 2.16 was found to have MFR₁₀/MFR₂ ratio of 5.90.

### Example 3

### (Preparation of hafnium catalyst)

A glass column of 35 mm in inside diameter was filled with a suspension in toluene of 40 g of dimethylsilylated silica gel (Art. 7719, a product of MERCK) deaerated at room temperature for 4 hours. Subsequently, 200 ml of the toluene solution (Hf = 2.07 mmol/l) of ethylenebis(indenyl)hafnium dichloride prepared in Example 1 was gradually poured into the column. A hafnium solution (Hf = 0.17 m mol/l) eluted by this operation was used as a catalyst component.

### (Polymerization)

The polymerization was carried out in the same manner as in Example 1 except that the polymerization was carried out at 70°C for 35 minutes using 6.6 × 10⁻³ mg atom of hafnium atom, to obtain 42.4 g of a colorless transparent polymer having a density of 0.855 g/cm³, the ethylene content of 76.2 mol%, [η] of 1.89 dl/g, M̅w/M̅n of 2.48, MFR₂ of 1.49 g/10 min and MFR₁₀/MFR₂ ratio of 10.1.

### Example 4

The polymerization was carried out in the same manner as in Example 2 except that the hafnium catalyst component prepared in Example 3 was used in an amount of 6.6 × 10⁻³ mg atom in terms of hafnium atom to obtain 17.0 g of a colorless transparent polymer having a density of 0.883 g/cm³, the ethylene content of 83.5 mol%, [η] of 1.61 dl/g, M̅w/M̅n of 2.54, MFR₂ of 0.73 g/10 min, and MFR₁₀/MFR₂ ratio of 12.2.

### Example 5

The polymerization was carried out in the same manner as in Example 1 except that the polymerization temperature employed was 40°C and the polymerization time employed was 15 minutes to obtain 20.5 g of a polymer having a density of 0.868 g/cm³, the ethylene content of 82.0 mol%, [η] of 1.79 dl/g, M̅w/M̅n of 2.81, MFR₂ of 0.90 g/10 min and MFR₁₀/MFR₂ ratio of 32.0.

### Evaluation

Heat-sealing properties of the propylene polymers obtained hereinabove were evaluated in the following manner.

### Preparation of film

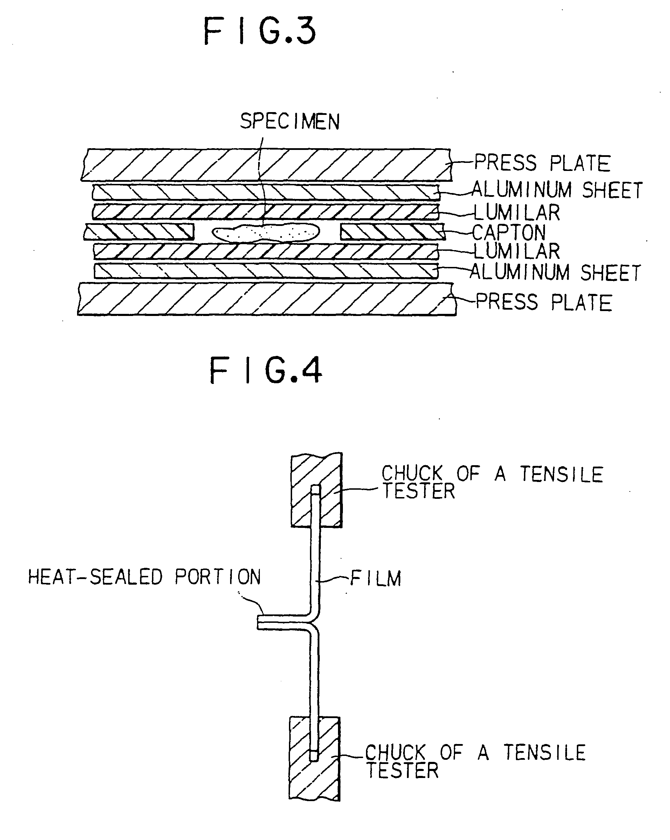

On a press plate were placed an aluminum sheet of a 0.1 mm thick, a polyester sheet (a product sold under a trade name of Rumiler by Toray) and a polyimide resin sheet (a product sold under a trade name of Capton by Du Pont), a square of 15 cm × 15 cm of the center of which had been cut off, in that order, and 0.8 g of the specimen was placed in this center (the cut-off portion of the polyimide resin sheet), and then Rumiler®, an aluminum sheet and a press plate were superposed thereon in that order (see Fig. 3).

The specimen thus interposed between the press plates was placed in a hot press kept at 200°C and preheated for about 5 minutes, followed by subjecting three times to pressure application (20 kg/cm² G) and release operation in order to remove air bubbles present in the specimen. Subsequently, the pressure was increased finally to 150 kg/cm² G and the specimen was heated for 5 minutes under pressure. After releasing the pressure, the press plate was taken out from a press machine and transferred to separate press machine kept at 30°C in its press in portion and then cooled for 4 minutes at a pressure of 100 kg/cm², followed by releasing the pressure and taking out the specimen therefrom. Of the films thus obtained, those having a uniform thickness of 50 ∼ 70 µm were used as the films for measurement.

### Measurement of heat-sealing strength

The films thus prepared are placed for 2 days in a hygrostat kept at 50°C (aging). In practicing the aging, sheets of paper are applied to both sides of the film so that the films do not come in contact with each other. The films thus aged are cut up into strips of a 15 mm thick, and two sheets of the strip are placed one upon another and then interposed between two sheets of Teflon Film of a 0.1 mm thick, followed by heat sealing. The heat sealing is carried out while maintaining the temperature of a lower portion of a hot plate of heat sealer constant at 70°C and varying only the temperature of an upper portion of hot plate suitably at intervals of 5°C. The heat-sealing pressure employed is 2 kg/cm², the heat-sealing time employed is 1 second, and a width of heat seal is 5 mm (accordingly a sealed area is 15 mm × 5 mm).

Heat-sealing strength is determined by obtaining a peeling strength of the heat sealed film subjected to peeling test at a rate of 30 cm/min at each heat-sealing temperature as mentioned above. (See Fig. 4.)

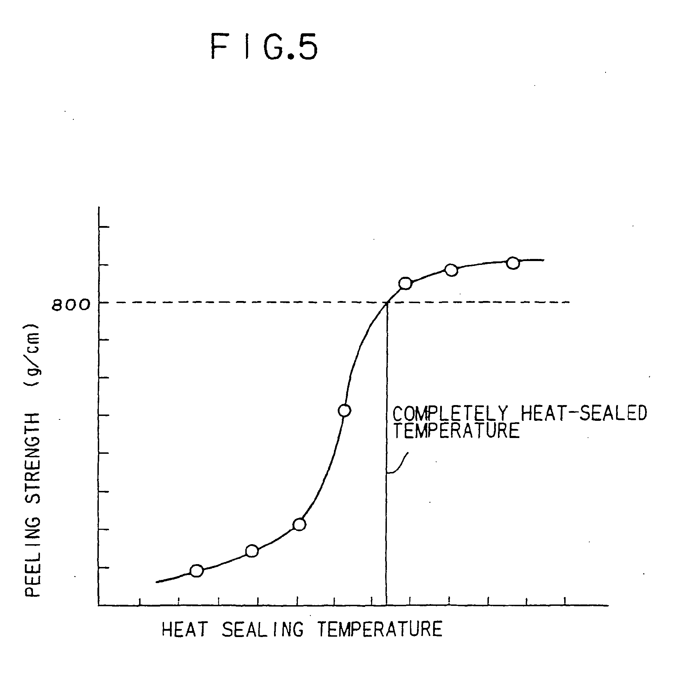

Following the above-mentioned procedure, a peeling strength at each of the heat-sealing temperatures preset at interval of 5°C is obtained, and the plots of heat-sealing temperature-peeling strength are connected by means of a curved line. On the basis of the curved line, a heat sealing temperature corresponding to a peeling strength of 800 g /15 mm is taken as a completely heat-sealed temperature (see Fig. 5).

Table 1 below shows completely heat-sealed temperatures of the propylene polymers obtained in the foregoing examples.

**Table 1**

| Example | 1 | 2 | 3 | 4 | 5 |
|---|---|---|---|---|---|
| Completely heat-sealed temperature (°C) | 134 | 125 | 117 | 122 | 120 |

### Example 6

A thoroughly nitrogen-purged 1 liter glass autoclave was charged with 328 ml of toluene and 22 ml of 1-octene, and the system was then elevated in temperature to 70°C while blowing ethylene gas thereinto. Successively, to the autoclave were added 0.4 mg atom in terms of Al atom of (iso-C₄H₉)₂Al-(O- 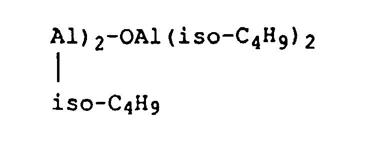 as the organoaluminum oxy-compound [B-2], 0.2 mg atom in terms of Al atom of the above-mentioned organoaluminum oxy-compound [B-1] and 3 × 10⁻³ mmol of ethylenebis(indenyl)hafnium dichloride to initiate polymerization. The polymerization was carried out at 70°C for 30 minutes while continuously feeding ethylene gas to the polymerization system to obtain 12.3 g of an ethylene/1-octene copolymer having M̅w/M̅n of 2.49, MFR₂ of 7.2 g/10 min, MFR₁₀/MFR₂ of 9.3 and a density of 0.853 g/cm³.

## Claims

1. An ethylene copolymer comprising 60 to 96% by mol of structural units (a) derived from ethylene and 4 to 40% by mol of structural units (b) derived from an α-olefin of 3 to 20 carbon atoms, and having
(A) a density of 0.85 to 0.92 g/cm^{3,}
(B) an intrinsic viscosity [η] as measured in decalin at 135°C of 0.1 to 10 d1/g,
(C) a ratio (Mw/Mn) of a weight average molecular weight (Mw) to a number average molecular weight (Mn) as measured by GPC of 1.2 to 3.0, and
(D) a ratio (MFR₁₀/MFR₂) of MFR₁₀ under a load of 10 kg to MFR₂ under a load of 2.16 kg at 190°C of 8 to 50.

2. A process for preparing an ethylene copolymer as claimed in claim 1 which process comprises copolymerizing ethylene and an α-olefin of 3 to 20 carbon atoms in the presence of a catalyst comprising
[A] a hafnium compound having as a ligand a multidentate compound in which at least two groups selected from indenyl groups or substituted groups thereof are linked together via ethylene groups or hafnium compounds obtained by treating the above-mentioned hafnium compounds with alkylsilylated silica gel, and
[B] an organoaluminum oxy-compound

## Patentansprüche

1. Ethylencopolymer, umfassend 60 bis 96 mol-% Struktureinheiten (a), die abgleitet sind von Ethylen, und 4 bis 40 mol-% Struktureinheiten (b), die abgeleitet sind von einem α-Olefin mit 3 bis 20 Kohlenstoffatomen, und mit
(A) einer Dichte von 0,85 bis 0,92 g/cm³,
(B) einer Grundviskosität [η], gemessen in Decalin bei 135°C, von 0,1 bis 10 dl/g,
(C) einem Verhältnis (Mw/Mn) des gewichtsmäßigen mittleren Molekulargewichts (Mw) zu dem zahlenmäßigen mittleren Molekulargewicht (Mn), gemessen durch GPC, von 1,2 bis 3,0 und
(D) einem Verhältnis (MFR₁₀/MFR₂) von MFR₁₀ unter einer Last von 10 kg zu MFR₂ unter einer Last von 2,16 kg bei 190°C von 8 bis 50.

2. Verfahren zur Herstellung eines Ethylencopolymers nach Anspruch 1, umfassend das Copolymerisieren von Ethylen mit einem α-Olefin mit 3 bis 20 Kohlenstoffatomen in Gegenwart eines Katalysators, umfassend
[A] eine Hafniumverbindung, die als Liganden eine mehrzähnige Verbindung umfaßt, bei der mindestens zwei Gruppen, ausgewählt aus Indenylgruppen oder substituierten Gruppen davon, miteinander über Ethylengruppen verbunden sind, oder Hafniumverbindungen, die erhalten worden sind durch Behandeln der oben erwähnten Hafniumverbindungen mit alkylsilyliertem Silicagel und
[B] eine Organoaluminiumoxyverbindung.

## Revendications

1. Copolymère d'éthylène, comprenant 60 à 96 % en moles de motifs structuraux (a) dérivés de l'éthylène et 4 à 40 % en moles de motifs structuraux (b) dérivés d'une α-oléfine comportant de 3 à 20 atomes de carbone, et présentant :
(A) une masse volumique de 0,85 à 0,92 g/cm³,
(B) une viscosité intrinsèque [η], mesurée dans de la décaline à 135 °C, de 0,1 à 10 dL/g,
(C) un rapport Mp/Mn de la masse molaire moyenne en poids Mp à la masse molaire moyenne en nombre Mn, mesuré par GPC, de 1,2 à 3,0,
(D) et un rapport MFR₁₀/MFR₂ de l'indice MFR₁₀ sous une charge de 10 kg à l'indice MFR₂ sous une charge de 2,16 kg, à 190° C, de 8 à 50.

2. Procédé de préparation d'un copolymère d'éthylène conforme à la revendication 1, lequel procédé comprend le fait de faire copolymériser de l'éthylène et une α-oléfine comportant de 3 à 20 atomes de carbone, en présence d'un catalyseur comprenant :
[A] un composé de hafnium ayant, comme ligand, un composé multidenté dans lequel au moins deux groupes, choisis parmi des groupes indényle et leurs groupes dérivés de substitution, sont reliés ensemble par l'intermédiaire de groupes éthylène, ou des composés de hafnium obtenus par traitement de composés de hafnium du type mentionné ci-dessus avec un gel de silice alkyl-silylé,
[B] et un composé oxy-organo-aluminium.
